# NEUE EUROPÄISCHE PATENTSCHRIFT

(11) **EP 0 116 859 B2**
(45) Veröffentlichungstag und Bekanntmachung des Hinweises auf die Entscheidung über den Einspruch: **09.06.1993**
(45) Hinweis auf die Patenterteilung: 11.10.1989
(21) Anmeldenummer: 84100518.4
(22) Anmeldetag: 18.01.1984
(51) Int. Cl.: B29C 53/06

(54) **Schneid-Rill-Stanzverfahren zur Herstellung von Zuschnitten mit eingeformten Faltkarten sowie Vorrichtung zur Durchführung des Verfahrens**
Cutting and grooving apparatus and method for making a blank provided with folding lines
Procédé et appareil de coupe et de rainurage pour la fabrication de flans pourvus de lignes de pliage

(30) Priorität: 26.01.1983 CH 432/83
(43) Veröffentlichungstag der Anmeldung: 29.08.1984
(73) Patentinhaber: Autoplex Interpackaging AG, CH-8957 Spreitenbach (CH)
(72) Erfinder: Covelli, Bruno, Dr., CH-5610 Wohlen (CH); Malthaner, Christian, CH-3457 Wasen (CH)
(74) Vertreter: Blum, Rudolf Emil Ernst

(56) Entgegenhaltungen:
- EP-A- 0 012 268
- CH-A- 328 013
- DE-A- 2 236 617
- DE-A- 3 015 998
- DE-C- 2 541 324
- DE-U- 1 844 710
- FR-A- 822 661
- FR-A- 1 518 073
- FR-A- 2 456 604
- FR-A- 2 490 143
- GB-A- 1 413 320
- US-A- 3 379 814
- US-A- 4 176 147
- US-A- 4 179 252

## Beschreibung

Die Erfindung betrifft ein Verfahren zum Herstellen von Rillen in Kunststoff-Folien nach dem Oberbegriff des Patentanspruchs 1. Die Erfindung betrifft weiterhin eine Vorrichtung zur Durchführung dieses Verfahrens.

Die gerillte Kunststoff-Folie dient also bei derweiteren Verarbeitung zum Bilden einer Verpackung. Durch die gebildete Rille ist die Kunststoff-Folie in der Dicke geschwächt und kann an dieser gebildeten Faltkante abgebogen werden. Beim Herstellen der Verpackung werden in bekannter Weise mechanische Aufricht-Falt- und Umlegeorgane verwendet. Diese können die gerillte Kunststoff-Folie nur dann einwandfrei weiter verarbeiten, wenn das Rillen in der gewünschten Weise einwandfrei durchgeführt worden ist. An der Rille weist das Folienmaterial nach dem Abbiegen ein innenwohnendes elastisches Rückstellvermögen auf. Um an den Rillen abgebogene Folienteile für die weitere Verarbeitung in einer gewünschten, vorbestimmten Richtung zu halten, ist also auch nur ein bestimmtes Rückstellvermögen erwünscht. Die Temperatur der Gegenplatte muss unterhalb der jeweiligen Erweichungstemperatur des aufliegenden Folienmaterials sein, damit dieses entlang der Gegenplatte taktweise verschoben werden kann. Die Temperatur des Rillenmessers dagegen kann weit über der erwähnten Erweichungstemperatur liegen, da das Rillmesser nur eine sehr kurze Verweilzeit zum Bilden der Rille an der Kunststoff-Folie hat.

Durch die FR-A-2 490143 ist ein einschlägiges Verfahren bekannt, bei dem die Gegenplatte auf einer Temperatur im Bereich zwischen 35° und 50 °C gehalten wird. Steuerbar dagegen ist die Temperatur des Rillmessers sowie seine Verweilzeit in der von ihm gebildeten Rille.

Es hat sich herausgestellt, dass dieses bekannte Verfahren noch verbesserungswürdig ist, und zwar in der Hinsicht, dass die Erwärmung der Platte in besonderer Weise gesteuert werden muss, um das gewünschte Mass an, dem Folienmaterial an der Rille innewohnendem elastischen Rückstellvermögen zu erhalten.

Das erfindungsgemässe Verfahren beim Verfahren nach dem Oberbegriff des Patentanspruchs 1 ergibt sich aus dem kennzeichnenden Teil des Patentanspruchs 1.

Um eine konstante Produktequalität zu erhalten, ist es notwendig, dass die Temperatur der Gegenplatte über seine gesamte Fläche gleich ist. Um das zu erzielen, dient die erfindungsgemässe Ausbildung der Vorrichtung nach dem kennzeichnenden Teil des Patentanspruchs 3.

Im folgenden wird eine zur Durchführung des erfindungsgemässen Verfahrens geeignete Vorrichtung als Ausführungsbeispiel der erfindungsgemässen Vorrichtung anhand von beiliegenden Zeichnungen näher erläutert. Es zeigen :
Figur 1 einen vertikalen Schnitt durch die erfindungsgemässe Vorrichtung,
Figuren 2a und 2b Diagramme zur Erläuterung der Wirkung des erfindungsgemässen Verfahrens bei einem Ausführungsbeispiel,
Figur 3 eine Draufsicht auf einen Teil der Gegenplatte, und
Figur 4 einen Schnitt nach der Linie IV IV in Figur 3.

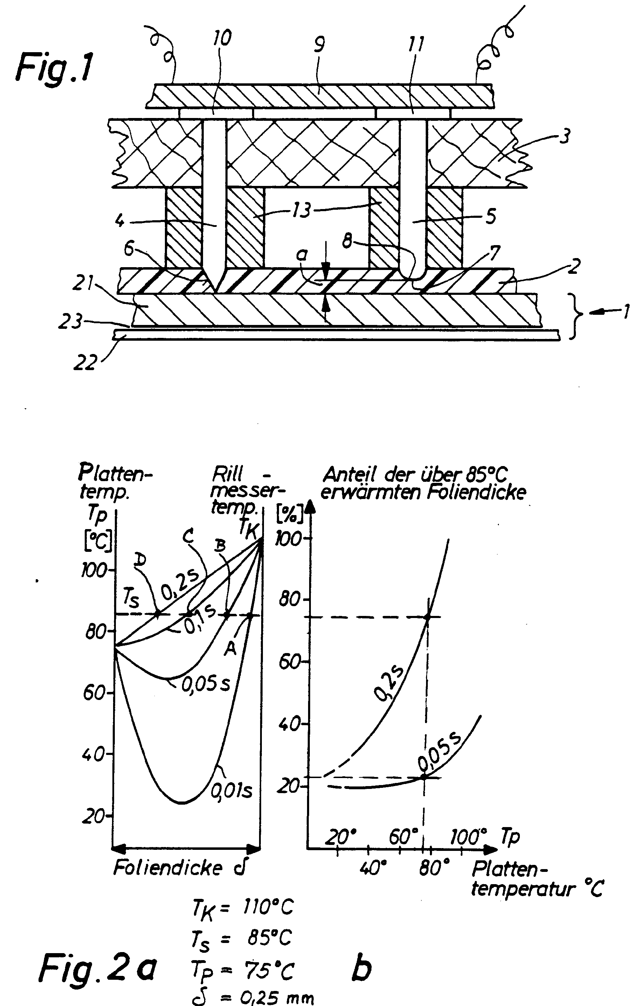

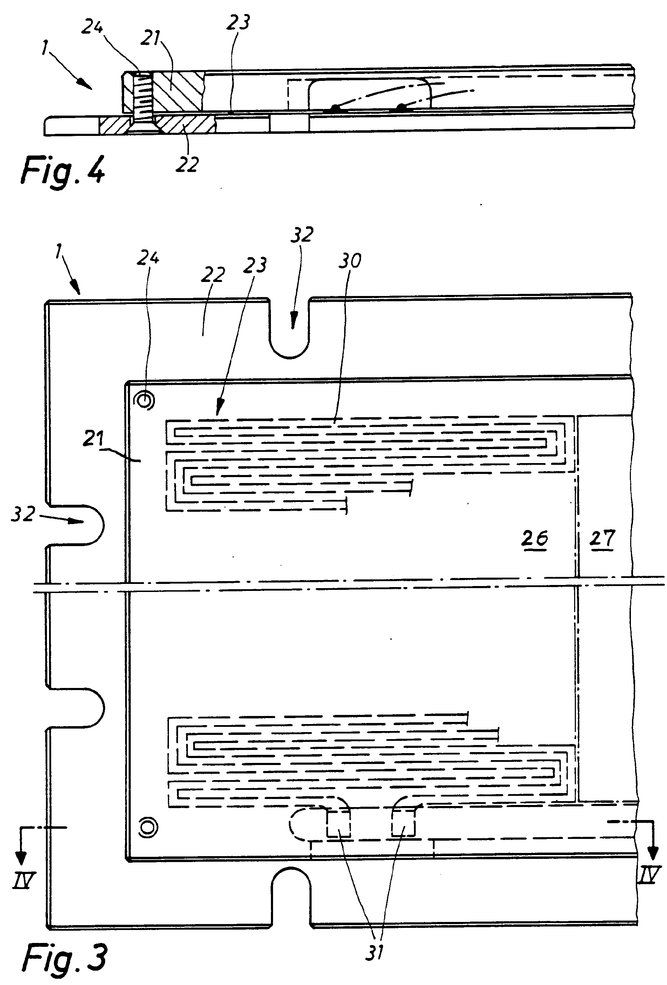

Die Vorrichtung nach den Figuren 1, 3 und 4 weist eine beheizte Gegenplatte 1 auf, die aus einer thermisch leitenden Deckplatte 21, einer Grundplatte 22 und einer dazwischenliegenden, in Folienform vorliegenden Widerstandsheizung 23 aufgebaut ist. Bei einem Ausführungsbeispiel hatte die Deckplatte 21 eine Dicke von 1 mm. Auf dieser liegt die Kunststoff-Folie 2 auf und wird taktweise entlang dieser verschoben. Die Vorrichtung hat ein Schneidmesser 4 mit einer Schneide 6 und weiterhin ein Rillmesser 5. Sowohl das Schneidmesser 4 wie das Rillmesser 5 sind als Leiste ausgebildet, so dass also das Rillmesser 5 an der tiefsten Stelle seines unteren abgerundeten Bereiches eine gedachte Rillkante 7 hat. Diese bestimmt also die Tiefe der in der Folie 2 gebildeten Rille 8. An der Stelle der gebildeten Rille weist die Folie 2 nur noch eine Dicke (a) auf. Das Rillmesser 5 und auch das Schneidmesser 4 werden beheizt, wofür eine Heizplatte 9 mit Uebertragungsplatten 10 und 11 dient. Schneidmesser 4 und Rillmesser 5 sind von thermischen Isolatoren 13 umgeben und werden von einer Arbeitsplatte 3 getragen. Die Bauteile 4-7 und 9-11 werden zum Rillen und Schneiden im Takt auf und ab bezüglich der Folie 2 bewegt. Die Gegenplatte 1 ist in partielle Bereiche 26 und 27 unterteilt, die einzeln beheizbar sind. Figur 3 zeigt einen solchen partiellen Bereich 26, der Leiterbahnen 30 der Widerstandsheizung aufweist, die mit Anschlüssen 31 versehen sind. Es sind ebenfalls nicht dargestellte Temperaturfühler partiell an der Gegenplatte 1 angeschlossen. Bei einem Ausführungsbeispiel betrug die Anschlussleistung derWiderstandsheizung 6 kW, und dies erlaubte innerhalb von drei Sekunden eine vom zugeordneten Fühler wahrgenommene Temperatur um 5 °C nachzuregeln. Die verwendeten Fühler hatten eine sehr schnelle Ansprechzeit, und die Heizleistung der Leiterbahn 30 war sehr hoch. Neben dem partiellen Bereich 26 der Gegenplatte 1 liegt dann ein benachbarter partieller Bereich 27. Jeder Bereich hat seine eigenen Fühler und kann einzeln beheizt werden.

Die Grundplatte 22 steht über die Deckplatte 21 vor, und die Grundplatte 22 ist mit Ausnehmungen 32 versehen, damit die ganze Gegenplatte 1 auf einem Bearbeitungstisch einer Anlage befestigt werden kann. Beide Platten 21 und 22 mit der dazwischenliegenden Widerstandsheizung 23 werden mittels Schrauben 24 zum Bilden der Gegenplatte 1 zusammengefügt. Durch die partielle Beheizung der Gegenplatte 1 kann eine gleichmässige Temperatur über der gesamten Fläche der Deckplatte 21 erzielt werden, da hierdurch z. B. Umgebungseinflüsse ausgeglichen werden können. Es ist verständlich, dass im Randbereich der Deckplatte 21, also im Bereich ihrer Enden, etwas geringere Temperaturen herrschen als im mittleren Bereich der Deckplatte, z. B. infolge von Luftströmungen und Abstrahlungen. Die im Taktweiterbewegte Kunststoff-Folie unterliegt ebenfalls diesen äusseren Einflüssen. Jeder taktmässig weiterbewegte Kunststoff-Folienabschnitt nimmt eine gewisse Wärmemenge von der Gegenplatte 1 weg. Es ist klar, dass die Wärmewegfuhrvon der Gegenplatte 1 durch die Folie 2 taktabhängig ist, so dass also bei einem erhöhten Arbeitstakt auch die Gegenplatte 1 verstärkt beheizt werden muss, um die Gegenplatte immer auf einer bestimmten. Temperatur zu halten. Die erfindungsgemässe Ausbildung der Vorrichtung dient also dazu sowohl die Gegenplattentemperatur immer auf einem gewünschten Mass zu halten und zu gewährleisten, dass diese gewünschte Temperatur auf der gesamten Gegenplattenfläche gleichmässig herrscht.

In den Figuren 2a und 2b wird nunmehr ein Ausführungsbeispiel des erfindungsgemässen Verfahrens gezeigt. Es wurde eine Kunststoff-Folie mit einer Dicke von 0,25 mm gerillt. Die Temperatur Tp der Gegenplatte 1 betrug 75 °C (diese muss immer unterhalb der jeweiligen Erweichungstemperatur des Folienmaterials liegen, damit dieses nicht anklebt). Die Temperatur Tₖ des Rillmessers betrug 110 °C (diese Temperatur kann wesentlich über der jeweiligen Erweichungstemperatur des Folienmaterials liegen, da die Verweilzeit des Rillmessers am Folienmaterial nur einen Bruchteil einer Sekunde beträgt). Es wurde eine Kunststoff-Folie gerillt, deren Erweichungstemperatur Tₛ bei 85 °C lag. Es wurden vier verschiedene Verweilzeiten des Rillenmes- sers 5 in der von ihm gebildeten Rille 8 gewählt, nämlich 0,01 Sekunde, weiterhin 0,05 Sekunden, dann 0,1 Sekunde und schliesslich 0,2 Sekunden. Die vorerwähnten Daten ergeben sich aus der Figur 2a. Die horizontale Linie bei der Erweichungstemperatur Tₛ ergibt verschiedene Schnittpunkte A, B, C und D mit den Kurven der vorerwähnten vier verschiedenen Verweilzeiten von 0,01 Sekunde bis 0,2 Sekunden. Diese Schnittpunkte A-D bezüglich der gesamten Foliendicke zeigen an, über welchen Teil der gesamten Foliendicke die Erweichungstemperaturvon 85 °C im Folienmaterial erreicht wurde. In Figur 2b sind diese Angaben in Prozent gemacht. Geht man bei der vorgegebenen Temperatur der Gegenplatte von 75 °C in Figur 2b vertikal nach oben, so werden die beiden gezeigten Kurven geschnitten. Die beiden Kurven sind fürVerweilzeiten von 0,05 Sekunden und 0,2 Sekunden eingetragen. Bei der Verweilzeit von 0,05 Sekunden beträgt der Anteil der über 85 °C erwärmten Foliendicke 22 %, und bei der Verweilzeit von 0,2 Sekunden liegt der Prozentsatz bei 75 %. Also bei einer Verweilzeit von 0,05 Sekunden des Rillmessers 5 in der Rille 8 der Folie 2 sind 22 % der gesamten Foliendicke auf die jeweilige Erweichungstemperatur von 85 °C erweicht worden. Bei derVerweilzeitvon 0,2 Sekunden sind 75 % der gesamten Foliendicke auf die Erweichungstemperatur von 85 °C erwärmt worden.

Je nach der Art des Folienmaterials und der Art der Weiterbehandlung des gerillten Folienmaterials kann man nun das Erfordernis aufstellen, dass das dem Folienmaterial an der Rille innenwohnende elastische Rückstellvermögen so und so gross ist. Danach wird bei vorgegebener Verweilzeit des Rillmessers 5 in der Rille 8 die Temperatur der Gegenplatte und die gegebenenfalls die Temperatur des Rillmessers gewählt, um den gewünschten Teil der Foliendicke auf oder über die jeweilige Erweichungstemperatur des Folienmaterials zu erwärmen, wobei dann die gewählte Temperatur der Gegenplatte durch die erfindungsgemässe Ausbildung der Vorrichtung über die gesamte Fläche der Deckplatte 21 genau eingehalten wird, und zwar unabhängig von der Taktzahl, d. h. unabhängig vom Takt der von der Gegenplatte 1 weggeführten Wärmemenge durch den jeweils weggeführten Kunststoff-Folien-Abschnitt.

## Patentansprüche

1. Verfahren zum Herstellen von Rillen (8) in Kunststoff-Folien (2), um Faltkanten zu bilden, wobei im Thermokontaktverfahren ein beheiztes Rillmesser (5) in die auf einer beheizten Gegenplatte (1) liegende Folie (2) eingedrückt und damit an dieser Stelle durch die gebildete Rille (8) die Foliendicke verringert (a) wird, worauf die Folie (2) taktweise weiterbewegt wird und bereit ist an den gebildeten Rillen (8) abgebogen und zum Bilden einer Verpackung aufgerichtet zu werden, dadurch gekennzeichnet, dass die Erwärmung der Gegenplatte (1) derart gesteuert wird, dass ein gewünschter und wählbarer Teil der gesamten Foliendicke (8) auf die jeweilige Erweichungstemperatur des Folienmaterials erwärmt wird und damit das dem Folienmaterial an der Rille (8) innenwohnende elastische Rückstellvermögen auf ein gewünschtes und wählbares Mass eingestellt wird.

2. Verfahren nach Anspruch 1, dadurch gekennzeichnet, dass zusätzlich zur Steuerung der Erwärmung der Gegenplatte (1) die Verweilzeit des Rillmessers (5) in der von ihm gebildeten Rille (8) veränderlich eingestellt wird.

3. Vorrichtung zur Durchführung des Verfahrens nach Anspruch 1, dadurch gekennzeichnet, dass zur Beheizung der Gegenplatte (1) Widerstandsheizelemente (23, 30, 31) in Folienform vorhanden sind, durch die partielle Bereiche (26, 27) der Gegenplatte (1) einzeln beheizbar sind und mit ebenfalls partiell angeordneten Temperaturfühlern, zum Erreichen einer gleichmässig verteilten Gegenplattentemperatur.

## Claims

1. A method of producing scores (8) in plastic foils (2) in order to form folding edges, whereby with the thermocontact-process a heated scoring knife (5) is pressed into the foil (2) placed on a heated backing plate (1) and accordingly will receive a reduction (a) of the foil thickness due to the score (8) produced at this location, whereafter the foil (2) is moved further step-wise and is prepared to be bent at the produced scores (8) and to be raised for the forming of a packing, characterized in that the heating of the backing plate (1) is controlled such that a desired and selectable part of the entire thickness (8) of the foil is heated up to the respective softening point of the foil material such that accordingly the elastic restoring force inherent in the foil material at the score (8) is adjusted to a desired and selected measure.

2. Method of claim 1, characterized in that in addition to controlling the heating of the backing plate (1), the dwelling time of the scoring knife (5) in the score (8) produced by same is adjustably adjusted.

3. Apparatus for practising the method according to claim 1, characterized in that foil-shaped resistance heating elements (23, 30, 31) are provided for the heating of the backing plate (1), by means of which partial sections (26,27) of the backing plate (1) can be heated individually and with likewise partially placed temperature sensors, for achieving an equally distributed backing plate temperature.

## Revendications

1. Procédé de réalisation de rainures (8) dans des feuilles en matière plastique (2), afin d'y former des arêtes de pliage, selon lequel on enfonce par procédé de contact thermique une lame à rainure (5), chauffée, dans la feuille (2) qui se trouve disposée sur une contre-plaque (1) chauffée, l'épaisseur de la feuille étant ainsi réduite à cet emplacement d'une valeur a) par la rainure (8) formée, après quoi on déplace à nouveau pas-à- pas la feuille (2), celle-ci étant prête à être pliée à l'endroit des rainures (8) formées et à être montée pour former un emballage, ce procédé étant caractérisé en ce qu'on commande le chauffage de la contre-plaque (1) de façon que ce soit une partie, voulue et pouvant être choisie, de l'épais- seurtotale (0) de la feuille qui soit portée à la température de ramollissement correspondant à la matière de la feuille considérée et qu'on puisse ainsi régler, à une valeur voulue et pouvant être choisie, la capacité de retour élastique qui est inhérente à cette feuille à l'endroit de la rainure (8).

2. Procédé suivant la revendication 1, caractérisée en ce que, outre le fait de commander le chauffage de la contre-plaque (1), on règle d'une manière variable la durée de maintien de la lame à rainure (5) dans la rainure (8) qu'elle forme.

3. Dispositif de mise en oeuvre d'un procédé suivant la revendication 1, caractérisé en ce que, pour chauffer la contre-plaque (1), il est prévu des éléments de chauffage à résistance (23, 30, 31 se présentant sous forme de feuille, à l'aide desquels on peut chauffer individuellement des zones partielles (26, 27) de cette contre-plaque (1), ce dispositif comportant des capteurs de température, à disposition également par zones, en vue d'obtenir une température uniformément répartie pour la contre-plaque.
